# EUROPEAN PATENT SPECIFICATION

(11) **EP 2 102 963 B1**
(45) Date of publication and mention of the grant of the patent: **27.10.2010**
(21) Application number: 07748874.0
(22) Date of filing: 10.01.2007
(51) Int. Cl.: H02J 9/00, H04N 5/63

(54) **SYSTEM AND METHOD FOR CONTROL LINE ISOLATION**
SYSTEM UND VERFAHREN ZUR STEUERLEITUNGSISOLATION
SYSTEME ET PROCEDE POUR UNE ISOLATION DU CABLE DE COMMANDE

(43) Date of publication of application: 23.09.2009
(73) Proprietor: TTE Technology, Inc., Indianapolis, IN 46206 (US)
(72) Inventor: TESTIN, William, J., Indianapolis, IN 46236 (US)
(74) Representative: Chamberlain, Alan James
(86) International application number: PCT/US2007/000646
(87) International publication number: WO 2008/085165

(56) References cited:
- EP-A- 1 411 616
- GB-A- 2 341 500
- US-A1- 2003 025 396

## Description

### FIELD OF THE INVENTION

The present invention relates generally to protecting electronic devices in electronic systems that have a run power mode and a standby power mode.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Many modern electronic devices, including television sets, have more than one power mode. For example, a television may have a "run" power mode in which all circuits in the system are powered up and a "standby" power mode in which some circuits are unpowered to conserve energy. In standby mode, some circuits remain powered as long as the television set is plugged into AC power. Electrical characteristics of the input/output ("I/O") pins of the unpowered circuits may cause undesirable effects on the circuits that remain powered in standby mode. For example, electrostatic discharge ("ESD") protection diodes in standard logic gates can change the sequencing of a run and a standby power supply if the sequencing of the supplies is uncontrolled. A system and method for protecting powered devices from effects attributable to the electrical characteristics of I/O pins of unpowered devices is desirable.

US 2003/025396 discloses a power supply system that includes a main power regulator, standby power regulator and automatic electronic switch, the main power regulator having a first rectifier to output a first voltage signal to provide the main power, the standby power regulator having a second rectifier to output a standby voltage signal to provide the standby power, the automatic electronic switch receiving the standby voltage signal in response to a power supply on signal and outputting a second voltage signal to alternatively provide the main power.

GB 2341500 describes a power supply arrangement for an electric device such as a television which uses standby operation to reduce power consumption. A remote control for controlling the powering up of the device consists of an EM wave generator, an infrared generator and a means for receiving an infrared signal. The electric device consists of a means for receiving the EM wave and using this signal to switch on and maintain the standby power supply and a means for receiving the infrared signal from the remote control and using this to power up a main power supply circuit of the electric device. Both the EM wave and the IR signal are required to power up the device and once the main power circuit is operating an infrared signal is generated by the electric device to instruct the remote control to cease sending the EM wave.

### SUMMARY OF THE INVENTION

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

The present invention relates to a power control circuit that comprises a run mode controller configured to operate the power control circuit in a run power mode a standby mode controller configured to operate the power control circuit in a standby power mode and a transistor being coupled between the run mode controller and the stamby mode controller, characterised in that the power control circuit further comprises a delay circuit adapted to control the transistor, wherein the transistor is configured to isolate the run mode controller from the standby mode controller until the run mode controller is initialized from an unpowered state to a powered state.

### BRIEF DESCRIPTION OF THE DRAWINGS

Advantages of the invention may become apparent upon reading the following detailed description and upon reference to the drawings in which:
FIG. 1 is a schematic diagram of a known power control circuit useful in illustrating an example of a problem addressed by an exemplary embodiment of the present invention;
FIG. 2 is a block diagram of an electronic device in accordance with an exemplary embodiment of the present invention;
FIG. 3 is a schematic diagram of a power control circuit in accordance with an exemplary embodiment of the present invention; and
FIG. 4 is a timing diagram in accordance with an exemplary embodiment of the present invention.

### DETAILED DESCRIPTION

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming; but would nevertheless be a routine undertaking of design, fabrication, and manufacture for those of ordinary skill having the benefit of this disclosure.

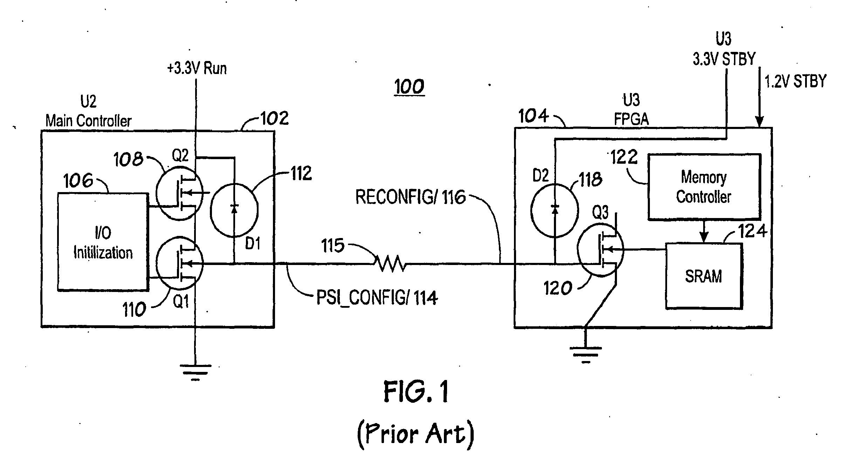

FIG. 1 is a schematic diagram of a known power control circuit useful in illustrating an example of a problem addressed by an exemplary embodiment of the present invention. The power control circuit is generally referred to by the reference number 100. The power control circuit 100, which may be implemented in an electronic device such as a television set, a projector, a set top box a computer system or the like, includes a run mode controller 102 and a standby mode controller 104.

The run mode controller 102, which may comprise an integrated circuit device, includes an I/O initialization circuit 106. The I/O initialization circuit 106 is adapted to perform initialization on other system components when the power control circuit 100 is placed in a run power mode. The run mode controller further includes a transistor 108 (Q2) connected to a run power supply (for example, 3.3 volts). A transistor 110 (Q1) is connected in series to the transistor 108. The transistor 110 is additionally connected to system ground. An ESD protection diode 112 (D1) is connected between the run power supply and a PSI_CONFIG/ signal 114.

The standby mode controller 104, which may comprise a field programmable gate array (FPGA) circuit, includes a diode 118 (D2) connected to one or more standby power supplies (for example, 3.3 volts and/or 1.2 volts). The diode 118 is connected to a transistor 120 (Q3) as shown in FIG. 1. The standby mode controller 104 further includes a memory controller 122, which is adapted to control a memory device such as a static random access memory (SRAM) 124. The connection between the diode 118 and the transistor 120 forms a RECONFIG/ signal 116, which is separated from the PSI_CONFIG/ signal 114 by a resistor 115. The transistor 120 may be adapted to provide programming access to the SRAM 124 when the RECONFIG/ signal 116 is set to a logical low state.

In the power control circuit 100, a potential problem may occur when the run power supply is off and the standby power supply remains on. In that situation, the ESD protection diode 112 may undesirably pull a control line such as the RECONFIG/ signal 116 into an unexpected state, which may have an adverse impact on system operation and/or performance. For example, the ESD protection diode 112 would be clamped at about 0.7 volts when the run power supply is turned off. Under some conditions, the clamping of the ESD protection diode 112 may pull the RECONFIG/ signal 116 into a low state. Because the RECONFIG/ signal 116 controls the programming of the SRAM 224, the contents of the SRAM 124 may be altered or destroyed. The alteration or destruction of data stored in the SRAM 124 may degrade performance of the power control circuit 100 or render the system in which the power control circuit 100 is disposed completely inoperable.

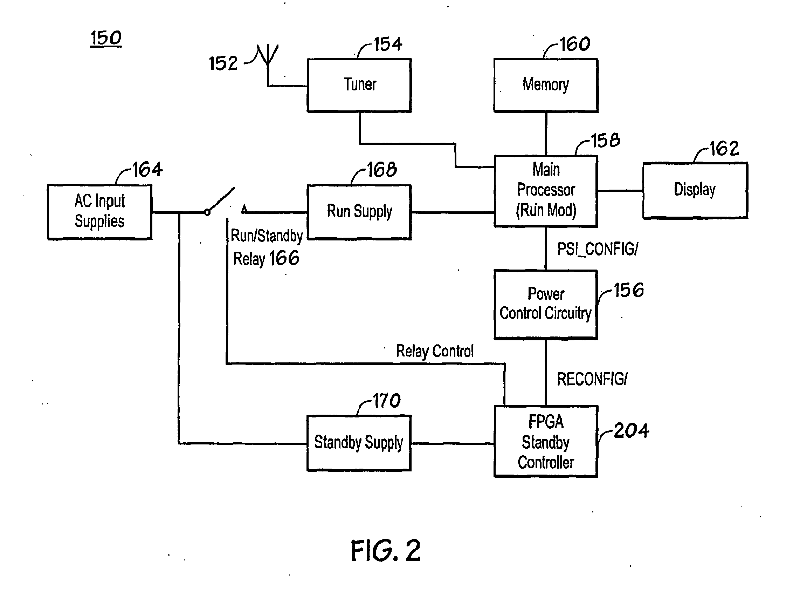

FIG. 2 is a block diagram of an electronic device in accordance with an exemplary embodiment of the present invention. The electronic device, which may comprise a television set, a projector, a set top box, a computer system or the like, is generally referred to by the reference number 150. The electronic device 150 comprises a signal source such as an antenna 152 or the like, a tuner 154, a power control module 156, a processor 158, a memory 160, and a display 162. The memory 160 may be adapted to hold machine-readable computer code that causes the processor 158 to operate.

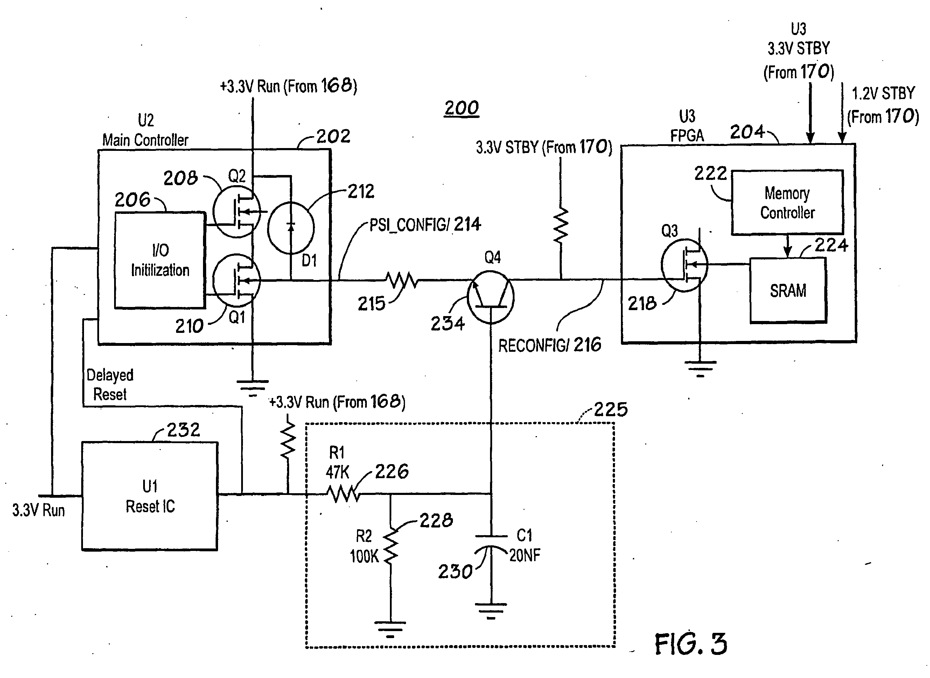

The exemplary embodiment shown in FIG. 2 further comprises AC input supplies 164 that are adapted to provide power for the operation of the electronic device 150. The AC input supplies are adapted to provide power for a run supply 168 and one or more standby supplies 170. The application of power to the run supply 168 and the standby supply/supplies 170 is controlled by a standby mode controller 204 (described in detail in reference to FIG. 3), which operates to control a run/standby relay 166.

In the exemplary embodiment shown in FIG. 2, the antenna 152 is adapted to receive a television signal that may comprise one or more channels of audio visual information. The tuner 154 is adapted to receive the television signal from the antenna 152 and produce a tuned signal corresponding thereto. The processor 158 is adapted to received the tuned signal and create a display signal corresponding to the tuned signal. The display 162 is adapted to receive the display signal and to display an image corresponding thereto.

FIG. 3 is a schematic diagram of a power control circuit 200 in accordance with an exemplary embodiment of the present invention. The power control circuit, which may comprise at least a portion of the power control module 156 (FIG. 2), is generally referred to by the reference number 200. The power control circuit 200 includes a run mode controller 202 and a standby mode controller 204 (also shown in FIG. 1).

The run mode controller 202, which may comprise an integrated circuit device, includes an I/O initialization circuit 206. The I/O initialization circuit 206 is adapted to perform initialization on other system components when the power control circuit 200 is placed in a run power mode. The run mode controller further includes a transistor 208 (Q2) connected to a run power supply 168 (for example, 3.3 volts). A transistor 210 (Q1) is connected in series to the transistor 208. The transistor 210 is additionally connected to system ground. An ESD protection diode 212 (D1) is connected between the run power supply 168 and a PSI_CONFIG/ signal 214.

The standby mode controller 204, which may comprise an FPGA circuit, is powered by one or more standby power supplies 170 (for example, 3.3 volts and/or 1.2 volts). A transistor 218 (Q3) is connected to receive the RECONFIG/ signal 216 as an input, as shown in FIG. 3. The standby mode controller 204 further includes a memory controller 222, which is adapted to control a memory device such as an SRAM 224. The transistor 218 may be adapted to provide programming access to the SRAM 224 when the RECONFIG/ signal 216 is set to a logical low state.

An exemplary embodiment of the present invention comprises a delay circuit 225 (shown in dashed lines) that is adapted to prevent the transistor 210 from enabling the RECONFIG/ signal 216 until the transistor 210 is properly configured. This is a result of the fact that the run mode controller 202 takes a finite amount of time to set up the PSI_CONFIG/ signal 214 after coming out of reset.

The delay circuit 225 comprises a resistor 226, which is connected through a pull-up resistor to the run power supply. Also included in the delay circuit 225 is a resistor 228, which is connected to form a voltage divider circuit with the resistor 226. The final component of the exemplary delay circuit 225 is a capacitor 230, which is connected in parallel to the resistor 228. The combination of the resistor 226, the resistor 228 and the capacitor 230 provide a time delay to a reset circuit 232. The values shown for the resistor 226, the resistor 228 and the capacitor 230 in FIG. 3 are exemplary and may vary depending on system design considerations, as would be appreciated by one of ordinary skill in the art. Those of ordinary skill in the art will appreciate that other delay circuit configurations may be substituted for the delay circuit 225 based on system design considerations.

The combination of a transistor 234, which is connected between the PSI_CONFIG/ signal 214 and the RECONFIG/ signal 216 as shown in FIG. 3, and the delay circuit 225 generates a delayed switch function. When the run power supply is not powered, the base of the transistor 234 is low and the RECONFIG/ signal 216 is isolated from the PSI_CONFIG signal 214. After the power control circuit 200 is turned on, the output of the reset circuit 232 goes high, which in turn powers the base of the transistor 234 according to the ratio of the value of the resistor 226 to the value of the resistor 228. The capacitor 230 provides a delay long enough to allow the PSI_CONFIG/ signal 214 to be initialized before the transistor 234 becomes active.

In this manner, the delay circuit 225 operates to enable the transistor 234, which isolates the PSI_CONFIG/ signal 214 from the RECONFIG/ signal 216 when the run power supply is off. The connection of the PSI_CONFIG/ signal 214 to any other circuitry is disabled during a period of time after the run mode controller 206 is first initialized. Additionally, an exemplary embodiment of the present invention may facilitate compliance with low power specifications such as the Energy Star specification for HDTV systems, which has a power consumption requirement of less than 1 watt during standby mode.

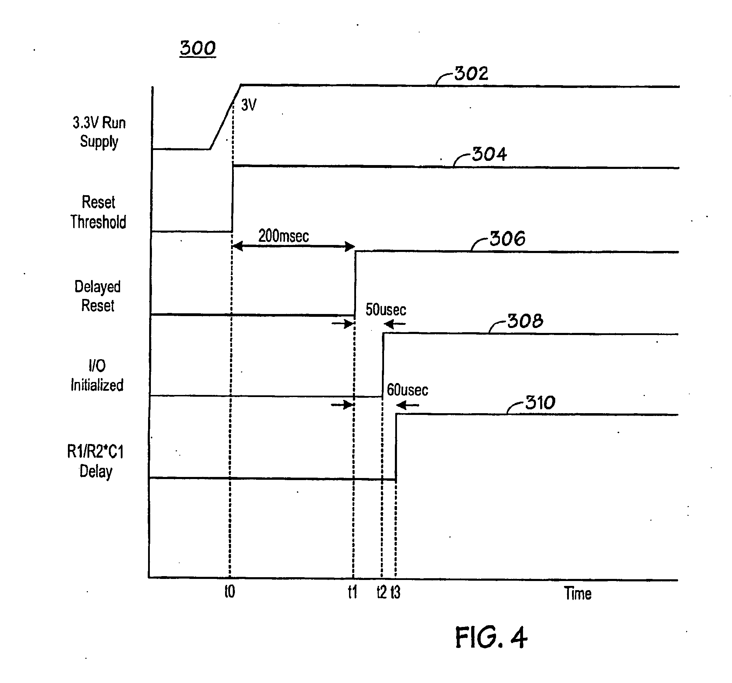

FIG. 4 is a timing diagram in accordance with an exemplary embodiment of the present invention. The diagram is generally referred to by the reference number 300. The timing diagram 300 represents the operation of an exemplary embodiment of the present invention such as the power control circuit 200 (FIG. 3). In the timing diagram 300, the x-axis corresponds to time and the y-axis shows the occurrence of events that begin with the application of the run power supply. In the following example, it is assumed that the standby power supply or supplies 170 are on prior to t0 and remain on throughout the entire time shown in FIG.

When the power control circuit 200 (FIG. 3) is turned on, a run supply signal 302 transitions from a low state. A reset threshold signal 304 goes high when the run supply signal 302 reaches about 3.0 volts. This time is indicated as t0 in FIG. 4. A delayed reset signal 306, which corresponds to the delayed reset signal produced by the reset circuit 232 in FIG. 3, goes high at t1 after a delay of about 200 milliseconds (msecs) from t0. The delayed reset signal 306 resets the run mode controller 202 (FIG. 3). When the run mode controller 202 (FIG. 3) is no longer reset, it takes about an additional 50 microseconds (usecs) until t2 for the PSI_CONFIG/ signal 214 to be initialized high.

As shown in FIG. 3 the delayed reset signal 306 is connected to the delay circuit 225, which is adapted to provide a delay of greater than 50 us. For purposes of illustration, that delay is identified as the R1/R2*C1 delay signal 310 and is shown to be about 60 us in FIG. 4. At t2, when the PSI_CONFIG/ signal 214 is initialized, the base of the transistor 234 (FIG. 3) is pulled to about 2.0 volts, which is sufficient to enable the transistor 234. Thus, the power control circuit 200 operates to avoid an undesirable reprogramming of the SRAM 224 (FIG. 3) when the run power supply is off by isolating the PSI_CONFIG/ signal 214 from the RECONFIG/ signal 216 until the run mode controller 202 (FIG. 3) is initialized.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the scope of the invention as defined by the following appended claims.

## Claims

1. A power control circuit (200), comprising:
a run mode controller (202) configured to operate the power control circuit (200) in a run power mode;
a standby mode controller (204) configured to operate the power control circuit (200) in a standby power mode; and
a transistor (234) being coupled between the run mode controller (202) and the standby mode controller (204);
**characterised in that** the power control circuit further comprises;
a delay circuit (225) adapted to control the transistor (234), wherein the transistor (234) is configured to isolate the run mode controller (202) from the standby mode controller (204) until the run mode controller (202) is initialized from an unpowered state to a powered state.

2. The power control circuit (200) recited in claim 1, comprising a reset circuit (232) coupled to the delay circuit (225) to provide a delayed reset signal to the run mode controller (202).

3. The power control circuit (200) recited in claim 1,
wherein the transistor (234) is adapted to isolate a PSI_CONFIG/ signal (214) produced by the run mode controller (202) from a RECONFIG/ signal (216) received by the standby mode controller (204) until the run mode controller (202) is initialized from an unpowered state to a powered state, wherein the PSI_CONFIG/ signal (214) is a signal that is initialized when the run mode controller (202) is initialized from the unpowered state to the powered state; and wherein the RECONFIG/ signal (216) controls the programming of a static random access memory SRAM (224) of the standby mode controller (204).

4. The power control circuit (200) recited in claim 1,
wherein the transistor (234) is adapted to isolate a control signal (214) provided by the run mode controller (202) until after the run mode controller (202) is initialized.

5. The power control circuit (200) recited in claim 4,
wherein the control signal (214) is adapted to enable reprogramming a memory device (224) associated with the standby mode controller (204).

6. The power control circuit (200) recited in claim 1,
wherein the run mode controller (202) comprises an input/output (I/O) initialization circuit (206) that is adapted to receive a delayed reset signal from the delay circuit (225).

7. The power control circuit (200) recited in claim 1,
wherein the delay circuit (225) comprises a voltage divider circuit (226, 228).

8. The power control circuit (200) recited in claim 1,
wherein the delay circuit (225) comprises a capacitor (230).

9. A television (150), comprising:
an antenna (152) that is adapted to receive a television signal;
a tuner (154) that is adapted to receive the television signal from the antenna (152) and produce a tuned signal;
a processor (158) that is adapted to receive the tuned signal and create a display signal corresponding to the tuned signal;
a display (162) that is adapted to receive the display signal and to display an image corresponding thereto; and
a power control circuit (200) as claimed in any of claims 1 to 8 adapted to control power in the television (150).

10. A method of operating a power control circuit (200), the method comprising:
operating the power control circuit (200) in a standby power mode;
**characterised in that** the method further comprises the steps of:
upon transitioning operation from the standby power mode to a run mode, delaying a reset signal associated with a run mode controller (202) to isolate the run mode controller (202) from a standby mode controller (204) until the run mode controller (202) is initialized from an unpowered state to a powered state.

11. The method recited in claim 10, comprising isolating a PSI_CONFIG/ signal (214) produced by the run mode controller (202) from a RECONFIG/ signal (216) received by the standby mode controller (204) until the run mode controller (202) is initialized from an unpowered state to a powered state; wherein the PSI_CONFIG/ signal (214) is a signal that is initialized when the run mode controller (202) is initialized from the unpowered state to the powered state; and wherein the RECONFIG/ signal (216) controls the programming of a static random access memory SRAM (224) of the standby mode controller (204).

12. The method recited in claim 10, comprising isolating a control signal (214) provided by the run mode controller 202) until after the run mode controller (202) is initialized.

13. The method recited in claim 12, wherein the control signal (214) is adapted to enable reprogramming a memory device (224) associated with the standby mode controller (204).

## Patentansprüche

1. Spannungsregelkreis (200), umfassend:
einen Laufmodusregler (202), der derart konfiguriert ist, dass er den Spannungsregelkreis (200) in einem Laufspannungsmodus betreibt;
einen Standbymodusregler (204), der derart konfiguriert ist, dass er den Spannungsregelkreis (200) in einem Standbyspannungsmodus betreibt; und
einen Transistor (234), der zwischen dem Laufmodusregler (202) und dem Standbymodusregler (204) angeschlossen ist;
**dadurch gekennzeichnet, dass** der Spannungsregelkreis weiterhin Folgendes umfasst:
eine Verzögerungsschaltung (225), die so ausgelegt ist, dass sie den Transistor (234) regelt,
wobei der Transistor (234) derart konfiguriert ist, dass er den Laufmodusregler (202) von dem Standbymodusregler (204) isoliert, bis der Laufmodusregler (202) von einem nicht angeschalteten in einen angeschalteten Zustand initialisiert wird.

2. Spannungsregelkreis (200) nach Anspruch 1, der eine Zurücksetzungsschaltung (232) umfasst, die mit der Verzögerungsschaltung (225) verbunden ist, so dass ein verzögertes Zurücksetzungssignal an den Laufmodusregler (202) gesendet wird.

3. Spannungsregelkreis (200) nach Anspruch 1, wobei der Transistor (234) derart ausgelegt ist, dass er ein von dem Laufmodusregler (202) erzeugtes PSI_CONFIG/-Signal (214) von einem RECONFIG/-Signal (216) isoliert, das von dem Standbymodusregler (204) empfangen wird, bis der Laufmodusregler (202) von einem nicht angeschalteten in einen angeschalteten Zustand initialisiert wird, wobei das PSI_CONFIG/-Signal (214) ein Signal ist, das initialisiert wird, wenn der Laufmodusregler (202) von dem nicht angeschalteten in den angeschalteten Zustand initialisiert wird; und wobei das RECONFIG/-Signal (216) die Programmierung von einem statischen Arbeitsspeicher SRAM (224) des Standbymodusreglers (204) regelt.

4. Spannungsregelkreis (200) nach Anspruch 1, wobei der Transistor (234) derart ausgelegt ist, dass er ein von dem Laufmodusregler (202) geliefertes Regelsignal (214) so lange isoliert, bis der Laufmodusregler (202) initialisiert wird.

5. Spannungsregelkreis (200) nach Anspruch 4, wobei das Regelsignal (214) derart ausgelegt ist, dass es eine Reprogrammierung einer Speichervorrichtung (224) in Verbindung mit dem Standbymodusregler (204) ermöglicht.

6. Spannungsregelkreis (200) nach Anspruch 1, wobei der Laufmodusregler (202) eine Eingabe/Ausgabe- (I/O-) Initialisierungsschaltung (206) umfasst, die derart ausgelegt ist, dass sie ein verzögertes Zurücksetzungssignal von der Verzögerungsschaltung (225) empfängt.

7. Spannungsregelkreis (200) nach Anspruch 1, wobei die Verzögerungsschaltung (225) eine Spannungsteilerschaltung (226, 228) umfasst.

8. Spannungsregelkreis (200) nach Anspruch 1, wobei die Verzögerungsschaltung (225) einen Kondensator (230) umfasst.

9. Fernsehgerät (150), umfassend:
eine Antenne (152), die so ausgelegt ist, dass sie ein Fernsehsignal empfängt;
einen Empfänger (Tuner) (154), der derart ausgelegt ist, dass er das Fernsehsignal von der Antenne (152) empfängt und ein abgestimmtes Signal erzeugt;
einen Prozessor (158), der derart ausgelegt ist, dass er das abgestimmte Signal empfängt und ein Anzeigesignal erzeugt, das dem abgestimmten Signal entspricht;
einen Anzeigeschirm (162), der derart ausgelegt ist, dass er das Anzeigesignal empfängt und ein diesem entsprechendes Bild anzeigt; und
einen Spannungsregelkreis (200) nach einem der Ansprüche 1 bis 8, der so ausgelegt ist, dass er die Spannung in dem Fernsehgerät regelt.

10. Verfahren zum Betreiben eines Spannungsregelkreises (200), das Folgendes umfasst:
Betreiben des Spannungsregelkreises (200) in einem Standbyspannungsmodus;
**dadurch gekennzeichnet, dass** das Verfahren zudem folgende Schritte umfasst:
nach dem Umschalten des Betriebs von dem Standbyspannungsmodus in einen Laufmodus: Verzögern eines Zurücksetzungssignals in Verbindung mit einem Laufmodusregler (202), so dass der Laufmodusregler (202) von einem Standbymodusregler (204) isoliert wird, bis der Laufmodusregler (202) von einem nicht angeschalteten in einen angeschalteten Zustand initialisiert wird.

11. Verfahren nach Anspruch 10, umfassend das Isolieren eines PSI_CONFIG/- Signals (214), das von dem Laufmodusregler (202) erzeugt wird, von einem RECONFIG/-Signal (216), das von dem Standbymodusregler (204) empfangen wird, bis der Laufmodusregler (202) von einem nicht angeschalteten in einen angeschalteten Zustand initialisiert wird, wobei das PSI_CONFIG/-Signal (214) ein Signal ist, das initialisiert wird, wenn der Laufmodusregler (202) von dem nicht angeschalteten in den angeschalteten Zustand initialisiert wird; und wobei das RECONFIG/-Signal (216) die Programmierung von einem statischen Arbeitsspeicher SRAM (224) des Standbymodusreglers (204) regelt.

12. Verfahren nach Anspruch 10, umfassend das Isolieren eines Regelsignals (214), das von dem Laufmodusregler (202) geliefert wird, bis der Laufmodusregler (202) initialisiert wird.

13. Verfahren nach Anspruch 12, wobei das Regelsignal (214) derart ausgelegt ist, dass es eine Reprogrammierung einer Speichervorrichtung (224) in Verbindung mit dem Standbymodusregler (204) ermöglicht.

## Revendications

1. Circuit de commande de puissance (200), comprenant :
un dispositif de commande de mode de fonctionnement (202) configuré de façon à faire fonctionner le circuit de commande de puissance (200) dans un mode de puissance de fonctionnement ;
un dispositif de commande de mode de veille (204) configuré de façon à faire fonctionner le circuit de commande de puissance (200) dans un mode de puissance de veille ; et
un transistor (234) couplé entre le dispositif de commande de mode de fonctionnement (202) et le dispositif de commande de mode de veille (204) ;
**caractérisé en ce que** le circuit de commande de puissance comprend de plus :
un circuit de retard (225) adapté de façon à commander le transistor (234), dans lequel le transistor est configuré de façon à isoler le dispositif de commande de mode de fonctionnement (202) du dispositif de commande de mode de veille (204) jusqu'à ce que le dispositif de commande de mode de fonctionnement (202) soit initialisé d'un état non alimenté à un état alimenté.

2. Circuit de commande de puissance (200) selon la revendication 1, comprenant un circuit de remise à zéro (232) couplé au circuit de retard (225) afin de délivrer un signal de remise à zéro retardé au dispositif de commande de mode de fonctionnement (202).

3. Circuit de commande de puissance (200) selon la revendication 1, dans lequel le transistor (234) est adapté de façon à isoler un signal PSI_CONFIG/ (214) produit par le dispositif de commande de mode de fonctionnement (202) d'un signal RECONFIG/ (216) reçu par le dispositif de commande de mode de veille (204) jusqu'à ce que le dispositif de commande de mode de fonctionnement (202) soit initialisé d'un état non alimenté à un état alimenté, le signal PSI_CONFIG/ (214) étant un signal qui est initialisé lorsque le dispositif de commande de mode de fonctionnement (202) est initialisé de l'état non alimenté à l'état alimenté ; et le signal RECONFIG/ (216) commandant la programmation d'une mémoire vive statique SRAM (224) du dispositif de commande de mode de veille (204).

4. Circuit de commande de puissance (200) selon la revendication 1, dans lequel le transistor (234) est adapté pour isoler un signal de commande (214) délivré par le dispositif de commande de mode de fonctionnement (202) jusqu'après l'initialisation du dispositif de commande de mode de fonctionnement (202).

5. Circuit de commande de puissance (200) selon la revendication 4, dans lequel le signal de commande (214) est adapté pour permettre la reprogrammation d'un dispositif de mémoire (224) associé au dispositif de commande de mode de veille (204).

6. Circuit de commande de puissance (200) selon la revendication 1, dans lequel le dispositif de commande de mode de fonctionnement (202) comprend un circuit d'initialisation d'entrée/sortie (I/O) (206) qui est adapté pour recevoir un signal de remise à zéro retardé à partir du circuit de retard (225).

7. Circuit de commande de puissance (200) selon la revendication 1, dans lequel le circuit de retard (225) comprend un circuit de diviseur de tension (226, 228).

8. Circuit de commande de puissance (200) selon la revendication 1, dans lequel le circuit de retard (225) comprend un condensateur (230).

9. Télévision (150), comprenant :
une antenne (152) qui est adaptée pour recevoir un signal de télévision ;
un tuner (154) qui est adapté pour recevoir le signal de télévision venant de l'antenne (152) et à produire un signal accordé ;
un processeur (158) qui est adapté pour recevoir le signal accordé et à créer un signal d'affichage correspondant au signal accordé ;
un dispositif d'affichage (162) qui est adapté pour recevoir le signal d'affichage et à afficher une image correspondant à celui-ci ; et
un circuit de commande de puissance (200) selon l'une quelconque des revendications 1 à 8, adapté pour commander la puissance dans la télévision (150).

10. Procédé d'actionnement d'un circuit de commande de puissance (200), le procédé comprenant :
le fait de faire fonctionner le circuit de commande de puissance (200) dans un mode de puissance de veille ;
**caractérisé en ce que** le procédé comprend en outre les étapes consistant à :
lors de l'opération de transition du mode de puissance de veille à un mode de fonctionnement, retarder un signal de remise à zéro associé à un dispositif de commande de mode de fonctionnement (202) afin d'isoler le dispositif de commande de mode de fonctionnement (202) d'un dispositif de commande de mode de veille (204) jusqu'à ce que le dispositif de commande de mode de fonctionnement (202) soit initialisé d'un état non alimenté à un état alimenté.

11. Procédé selon la revendication 10, comprenant l'isolement d'un signal PSI_CONFIG/ (214) produit par le dispositif de commande de mode de fonctionnement (202) d'un signal RECONFIG/ (216) reçu par le dispositif de commande de mode de veille (204) jusqu'à ce que le dispositif de commande de mode de fonctionnement (202) soit initialisé d'un état non alimenté à un état alimenté ; dans lequel le signal PSI_CONFIG/ (214) est un signal qui est initialisé lorsque le dispositif de commande de mode de fonctionnement (202) est initialisé de l'état non alimenté à l'état alimenté ; et dans lequel le signal RECONFIG/ (216) commande la programmation d'une mémoire vive statique SRAM (224) du dispositif de commande de mode de veille (204).

12. Procédé selon la revendication 10, comprenant l'isolement d'un signal de commande (214) délivré par le dispositif de commande de mode de fonctionnement (202) jusqu'après l'initialisation du dispositif de mode de fonctionnement (202).

13. Procédé selon la revendication 12, dans lequel le signal de commande (214) est adapté pour permettre la reprogrammation d'un dispositif de mémoire (224) associé au dispositif de commande de mode de veille (204).
